# EUROPEAN PATENT APPLICATION

(11) **EP 3 159 055 A1**
(43) Date of publication of application: **26.04.2017**
(21) Application number: 15833035.7
(22) Date of filing: 19.08.2015
(51) Int. Cl.: B01D 29/62, B01D 33/44, B01D 29/88, B01D 33/70, B63B 13/00

(54) **WATER TREATMENT METHOD AND WATER TREATMENT DEVICE**

(30) Priority: 22.08.2014 JP 2014169148
(71) Applicant: Sumitomo Electric Industries, Ltd., Osaka-shi, Osaka 541-0041 (JP)
(72) Inventor: OZAWA, Isao, Osaka-shi Osaka 554-0024 (JP); MIYATAKE, Kenichiro, Osaka-shi Osaka 554-0024 (JP); UEYAMA, Munetsugu, Osaka-shi Osaka 554-0024 (JP)
(74) Representative: Boult Wade Tennant
(86) International application number: PCT/JP2015/073169
(87) International publication number: WO 2016/027816

(57) **Abstract**

A water treatment method used in a water treatment device including a filter for filtering untreated water and a housing that houses the filter includes a step of putting the untreated water into the housing to obtain filtered water that has permeated through the filter, and a step of replacing the untreated water in the housing by storage water. The storage water is water having less favorable survival conditions for microbes than the untreated water.

## Description

### Technical Field

The present invention relates to a water treatment method and a water treatment device, and in particular to a water treatment method used in a water treatment device for performing filtration of untreated water using a filter, and a water treatment device.

### Background Art

Hitherto, filter devices that perform filtration of untreated water using a filter have been developed. For example, PTL 1 (Japanese Patent No. 4775962) discloses a technology described below. Specifically, a filtering device described in PTL 1 includes a plurality of filtration bodies each having a tubular peripheral wall functioning as a filtration wall, one end in an axial direction being an open end, and the other end being a closed end; a substrate which has a shape of a plate, which holds, on one surface of the plate, the filtration bodies on the open ends of the filtration bodies at a plurality of positions in a circumferential direction around a central axis orthogonal to the surface of the plate, and in which through-holes penetrating in a direction of the plate thickness are formed at positions that communicate with the inside of the filtration bodies; a housing that houses an assembled body formed by holding the plurality of filtration bodies with the substrate and that supports the assembled body with the substrate; and a reverse cleaning mechanism including a reverse cleaning pipe disposed adjacent to the other surface of the plate of the substrate and provided in the housing. In this filtering device, a space in the housing is divided into a first chamber on the one plate surface side of the substrate and a second chamber on the other plate surface side of the substrate. The housing includes an original liquid inlet communicating with the second chamber and a filtrate outlet communicating with the first chamber. A drain pipe communicating with the reverse cleaning pipe extends from the second chamber to the outside of the housing.

### Citation List

### Patent Literature

PTL 1: Japanese Patent No. 4775962

### Summary of Invention

### Technical Problem

During the period in which filtration of water to be treated is not performed, a filtering device is often allowed to be in a state where the untreated water is stored in a housing of the filtering device with the consideration that, for example, substances adhering to a filter are unlikely to separate due to drying in the housing, and it is necessary to perform an operation for removing air in the device the next time filtration is performed. However, when seawater, which is untreated water, is stored in the filtering device, microbes such as plankton contained in the seawater adhere to the filter, and microbes that are not completely separated from the filter during cleaning of the filter proliferate. Accordingly, even if cleaning of the filter is performed, clogging of the filter may occur again.

The present invention has been made in order to solve the above problem. An object of the present invention is to provide a water treatment method and a water treatment device that can suppress the occurrence of clogging of a filter.

### Solution to Problem

(1) To solve the above problem, a water treatment method according to an aspect of the present invention is a water treatment method for replacing untreated water in a water treatment device by storage water, the water treatment device including a filter for filtering the untreated water, and a housing that houses the filter. The storage water is water having less favorable survival conditions for microbes than the untreated water. The water treatment method includes a step of putting the untreated water into the housing to obtain filtered water that has permeated through the filter, and a step of replacing the untreated water in the housing by storage water.
(7) To solve the above problem, a water treatment device according to an aspect of the present invention includes a filter for filtering untreated water, a housing that houses the filter, and a water-exchanging part for replacing the untreated water in the housing by storage water having less favorable survival conditions for microbes than the untreated water.

In the present invention, the function of a part of or all of the control in the water treatment method can be realized as a semiconductor integrated circuit. The present invention can be realized as a program for enabling a computer to execute the function of a part of or all of the control in the water treatment method.

### Advantageous Effects of Invention

According to the present invention, the occurrence of clogging of a filter can be suppressed.

### Brief Description of Drawings

[Fig. 1] Figure 1 is a view illustrating the structure of a water treatment system including water treatment devices according to a first embodiment of the present invention.
[Fig. 2] Figure 2 is a vertical sectional view illustrating the structure of a water treatment device according to the first embodiment of the present invention.
[Fig. 3] Figure 3 is a horizontal sectional view illustrating the structure of a section taken along line III-III in Fig. 2.
[Fig. 4] Figure 4 is a flowchart illustrating the flow of operations of a water treatment device according to the first embodiment of the present invention.
[Fig. 5] Figure 5 is a view illustrating the structure of a water treatment system including water treatment devices according to a second embodiment of the present invention.
[Fig. 6] Figure 6 is a vertical sectional view illustrating the structure of a water treatment device according to the second embodiment of the present invention.
[Fig. 7] Figure 7 is a view illustrating the structure of a water treatment system including water treatment devices according to a third embodiment of the present invention.
[Fig. 8] Figure 8 is a vertical sectional view illustrating the structure of a water treatment device according to the third embodiment of the present invention.

### Reference Signs List

- 11: cartridge
- 12: rotation shaft
- 13: housing
- 14: motor
- 15: control unit
- 16: untreated-water flow path
- 17: untreated-water outflow unit
- 18: filtered-water flow path
- 19: discharge flow path
- 21: filter
- 22: upper lid portion
- 23: lower lid portion
- 24: opening
- 103, 104: pump
- 101: water treatment device
- 102: ultraviolet irradiation device
- 105: seawater intake
- 106: filtered-water tank
- 107: storage water tank
- 121, 122, 123, 124, 125, 126: pipe
- 131, 132, 133, 134, 135: valve
- 201: water treatment system

### Description of Embodiments

First, the contents of embodiments of the present invention will be listed and described.

(1) A water treatment method according to an embodiment of the present invention is a water treatment method for replacing untreated water in a water treatment device by storage water, the water treatment device including a filter for filtering the untreated water, and a housing that houses the filter. The storage water is water having less favorable survival conditions for microbes than the untreated water. The water treatment method includes a step of putting the untreated water into the housing to obtain filtered water that has permeated through the filter, and a step of replacing the untreated water in the housing by storage water.
   According to this method, proliferation of microbes in the housing during the period in which filtration of untreated water is not performed is suppressed, and the occurrence of clogging of the filter can be suppressed.
(2) Preferably, the water treatment method further includes a step of performing a cleaning operation of the filter, the cleaning operation including, after the filtered water is obtained, allowing the untreated water to flow out toward the filter while rotating the filter. In the step of replacing the untreated water by storage water, the untreated water is preferably replaced by the storage water after the cleaning operation is performed.
   In this manner, the untreated water is replaced by the storage water in a state in which the filter is cleaned to separate microbes adhering to the filter from the filter. Accordingly, the probability that microbes in the housing come in contact with the storage water is increased, and proliferation of microbes can be further prevented. In addition, the whole filter can be cleaned with high efficiency by rotating the filter.
(3) More preferably, in the step of performing a cleaning operation, the cleaning operation is performed in a state in which a flow path for obtaining the filtered water is closed.
   In the cleaning operation, since the flow path for obtaining filtered water is closed, the filtered water accumulates inside the filter without being introduced into the flow path, and the inside of the filter is filled with the filtered water. When untreated water is further allowed to flow out toward a filtering surface, the possibility that, after the untreated water comes in contact with the filtering surface, the untreated water may flow to the outside of the filter without permeating through the filter increases. As a result, it is possible to prevent, for example, microbes, which may cause clogging of the filter, from adhering to the filter.
   Since the inside of the filter is filled with the filtered water, for example, microbes that have already adhered become easily separated from the filter. That is, a higher cleaning effect to the filter can be obtained. By replacing the untreated water by storage water after this highly effective cleaning operation, the probability that microbes adhering to the filter come in contact with the storage water can be further increased.
(4) Preferably, the water treatment method further includes a step of, after the untreated water is replaced by the storage water, rotating the filter in a state in which the storage water is contained in the housing.
   By stirring the inside of the housing containing the storage water, the probability that microbes in the housing come in contact with the storage water is further increased to further prevent microbes in the housing from proliferating.
(5) Preferably, the storage water is water having a salinity of less than 2%.
   By replacing water in the housing by the storage water having a salinity of less than 2%, the environment in the housing can be made to an environment in which microbes living in seawater are unlikely to proliferate.
(6) Preferably, the storage water is the filtered water that has permeated through the filter.
   Since the filtered water that has permeated through the filter is used as storage water, the storage water need not be prepared in advance. Furthermore, a tank or the like for storing the storage water need not be provided.
(7) A water treatment device according to an embodiment of the present invention includes a filter for filtering untreated water, a housing that houses the filter, and a water-exchanging part for replacing the untreated water in the housing by storage water, in which the storage water is water having less favorable survival conditions for microbes than the untreated water.
(8) A water treatment device according to an embodiment of the present invention includes a filter for filtering untreated water, a housing that houses the filter, and a water-exchanging part for replacing the untreated water in the housing by filtered water.

With this structure, proliferation of microbes in the housing during the period in which filtration of untreated water is not performed is suppressed, and the occurrence of clogging of the filter can be suppressed.

Furthermore, the water treatment method according to the present invention can also be applied to a method for an operation-finishing process of a water treatment device.

Embodiments of the present invention will now be described with reference to the drawings. In the drawings, the same portions or the corresponding portions are assigned the same reference numerals, and a description thereof is not repeated. At least some of features of the embodiments described below may be combined as required.

### (First embodiment)

### [Structure and basic operation]

### (Structure of overall water treatment system)

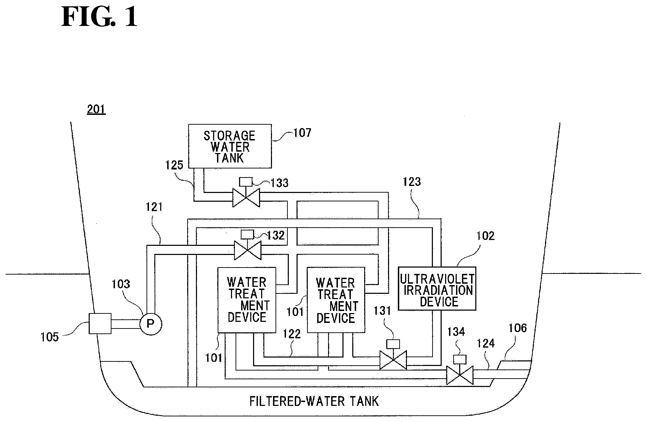

Figure 1 is a view illustrating the structure of a water treatment system including water treatment devices according to a first embodiment of the present invention.

Referring to Fig. 1, a water treatment system 201 according to the first embodiment of the present invention performs filtration of, for example, ballast water carried in a ship or ballast water discharged from a ship. The water treatment system 201 includes water treatment devices 101, an ultraviolet irradiation device 102, a pump 103, valves 131, 132, 133, and 134, a seawater intake 105, a filtered-water tank 106, a storage water tank 107, and pipes 121, 122, 123, 124, and 125.

The water treatment system 201 illustrated in Fig. 1 includes a plurality of water treatment devices 101. However, the structure of the water treatment system 201 is not limited to such a structure including a plurality of water treatment devices 101. The water treatment system 201 may have a structure including a single water treatment device 101.

When ballast water is carried in a ship, seawater flows as untreated water from the seawater intake 105 in a state where the valves 131, 132, and 134 are opened and the valve 133 is closed. This untreated water is pushed out by the pump 103 and supplied to the water treatment devices 101 through the pipe 121. The water treatment devices 101 each perform filtration of the untreated water using a filter in order to remove microbes such as plankton or suspended substances contained in the untreated water supplied from the pump 103. The water treatment devices 101 then supply filtered water to the ultraviolet irradiation device 102 through the pipe 122.

The ultraviolet irradiation device 102 performs, for example, sterilization of microbes contained in the filtered water supplied from the water treatment devices 101 by irradiating the filtered water with ultraviolet light. Subsequently, the ultraviolet irradiation device 102 supplies the filtered water after being irradiated with ultraviolet light to the filtered-water tank 106 through the pipe 123. Consequently, the seawater obtained after the filtration and the sterilization treatment is stored in the filtered-water tank 106.

For example, the microbes or suspended substances removed in the water treatment devices 101 are discharged to the outside of the ship or the like through the pipe 124.

The water treatment system 201 may be used for filtration of untreated water other than ballast water carried in a ship or ballast water discharged from a ship.

For example, in the case where filtration of untreated water is finished and filtration of untreated water is not performed for the time being, the pipe 125, the valves 131, 132, 133, and 134, the storage water tank 107, and a control unit 15, which will be described below, of the water treatment devices 101 function as a water-exchanging part for replacing the untreated water in the water treatment devices 101 by storage water.

Specifically, in a state where the valves 131 and 132 are closed and the valves 133 and 134 are opened as a result of control by the control unit 15, the storage water stored in the storage water tank 107 is supplied to the water treatment devices 101 through the pipe 125. In this case, since the untreated water, that is, seawater contained in the water treatment devices 101 is discharged to the outside of the ship or the like through the pipe 124, water in the water treatment devices 101 is gradually exchanged from the untreated water to the storage water.

When the water treatment devices 101 are filled with the storage water, the valve 134 is closed. A state where the storage water is stored in the water treatment devices 101 is continued until filtration of untreated water is performed next time.

### (Structure of water treatment device)

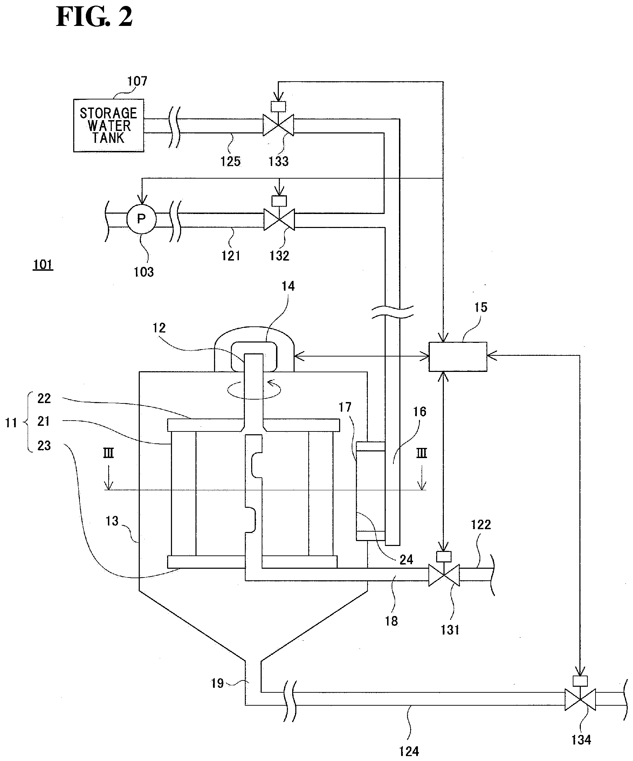

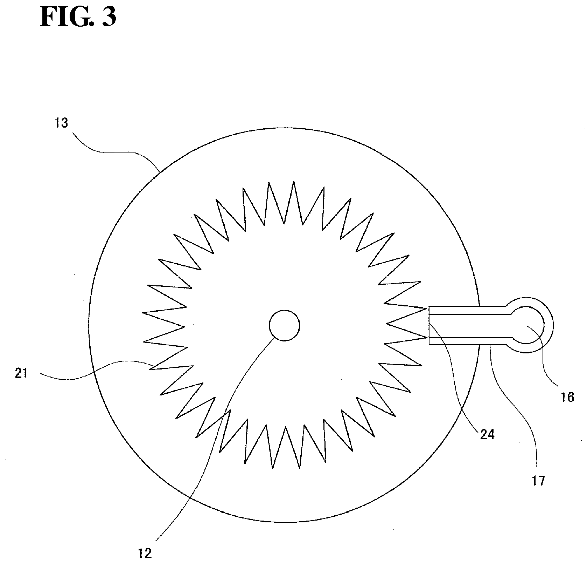

Figure 2 is a vertical sectional view illustrating the structure of a water treatment device according to the first embodiment of the present invention. Figure 3 is a horizontal sectional view illustrating the structure of a section taken along line III-III in Fig. 2.

Referring to Figs. 2 and 3, a water treatment device 101 includes a cartridge 11, a rotation shaft 12, a housing 13, a motor 14, a control unit 15, an untreated-water flow path 16, an untreated-water outflow unit 17, a filtered-water flow path 18, and a discharge flow path 19.

The cartridge 11 is detachably attached to the housing 13 and includes a filter 21, an upper lid portion 22, and a lower lid portion 23. An opening 24 from which untreated water flows out is formed in the untreated-water outflow unit 17.

The filter 21 has a cylindrical shape and is formed by using, for example, a polyethylene non-woven cloth. The filter 21 is rotatably attached so that a filtering surface moves in the circumferential direction about the rotation shaft 12. The filtering surface of the filter 21 is formed to have a shape of pleats folded along radial directions of the rotation circle so as to repeat mountains and valleys. The filter 21 does not necessarily need to have a pleated shape illustrated in Fig. 3.

The upper lid portion 22 covers an upper portion of the filter 21, and the lower lid portion 23 covers a lower portion of the filter 21. The housing 13 is provided so as to cover the whole cartridge 11. The motor 14 is connected to the rotation shaft 12 and rotates the filter 21 about the rotation shaft 12.

The untreated-water flow path 16 supplies untreated water, which is pushed out from the pump 103, to the untreated-water outflow unit 17. The untreated-water outflow unit 17 extends from the untreated-water flow path 16 toward the inside of the housing 13 and allows the untreated water supplied from the untreated-water flow path 16 to flow out from the opening 24 toward the filtering surface of the filter 21. The opening 24 is formed to have, for example, a thin rectangular shape extending in the vertical direction.

The control unit 15 controls driving of the motor 14, opening and closing of the valves 131, 132, 133, and 134, and driving of the pump 103.

For example, when filtration of untreated water is performed, the control unit 15 opens the valves 131, 132, and 134, closes the valve 133, and drives the motor 14 and the pump 103. In this case, the untreated water flowing out from the opening 24 of the untreated-water outflow unit 17 toward the filtering surface is filtered by permeation from the outside of the filter 21 to the inside of the filter 21. The resulting filtered water is introduced to the filtered-water flow path 18 disposed inside the filter 21 and supplied from the filtered-water flow path 18 to another water treatment device 101 or an ultraviolet irradiation device 102 through the valve 131 and a pipe 122.

This operation performed by the water treatment device 101 is hereinafter referred to as "filtration operation".

In the filtration operation performed by the water treatment device 101, when untreated water comes in contact with the filter 21, adhering substances, which may cause clogging of the filter 21, may be consequently separated from the filter 21. That is, in the filtration operation of the water treatment device 101, cleaning of the filter 21 may be performed in parallel with the filtration of the untreated water. In such a case, the separated adhering substances flow to the bottom of the housing 13 together with, for example, the untreated water that has not permeated through the filter 21. Subsequently, for example, the untreated water and the adhering substances separated from the filter 21 that flow to the bottom of the housing 13 are discharged to the outside of the water treatment device 101 through the discharge flow path 19, a pipe 124, and the valve 134.

For example, after the filtration operation, the control unit 15 opens the valves 132 and 134, closes the valves 131 and 133, and drives the motor 14 and the pump 103. In this case, the untreated water that is allowed to flow out from the opening 24 of the untreated-water outflow unit 17 toward the filtering surface is filtered by permeation from the outside of the filter 21 to the inside of the filter 21 as in the case of the filtration operation. Since the valve 131 is closed, filtered water, which has permeated from the outside of the filter 21 to the inside of the filter 21, accumulates inside the filter 21 without being introduced into the filtered-water flow path 18, and the inside of the filter 21 is filled with the filtered water. When the untreated water is further allowed to flow out from the opening 24 of the untreated-water outflow unit 17 toward the filtering surface, the possibility that, after the untreated water comes in contact with the filtering surface, the untreated water may flow to the bottom of the housing 13 without permeating through the filter 21 increases.

As a result, the untreated water not only separates substances adhering to the filter 21 but also prevents new substances from adhering to the filter 21. Thus, the filter 21 is efficiently cleaned. Subsequently, for example, the untreated water and the adhering substances separated from the filter 21 that flow to the bottom of the housing 13 are discharged to the outside of the water treatment device 101 through the discharge flow path 19, the pipe 124, and the valve 134.

This operation performed by the water treatment device 101, that is, the operation of cleaning substances adhering to the filter 21 without filtering untreated water is hereinafter referred to as "cleaning operation".

For example, after the cleaning operation, the control unit 15 opens the valves 133 and 134, closes the valves 131 and 132, and drives the motor 14. In this case, storage water stored in the storage water tank 107 is pushed out by a pump (not illustrated) and is allowed to flow out from the opening 24 of the untreated-water outflow unit 17 toward the filtering surface.

As in the case of the cleaning operation, since the valve 131 is closed, the storage water accumulates inside the filter 21 without being introduced into the filtered-water flow path 18, and the inside of the filter 21 is filled with the storage water. When the storage water is further allowed to flow out from the opening 24 of the untreated-water outflow unit 17 toward the filtering surface, after the storage water comes in contact with the filtering surface, the storage water flows to the bottom of the housing 13 without permeating through the filter 21, while separating substances that still adhere to the filter 21 even after the cleaning operation.

In this case, the untreated water contained in the housing 13 is gradually discharged to the outside of the water treatment device 101 through the discharge flow path 19, the pipe 124, and the valve 134, and water in the housing 13 is exchanged from untreated water to storage water. This operation performed by the water treatment device 101, that is, the operation of exchanging water in the housing 13 from untreated water to storage water is hereinafter referred to as "water exchange operation".

As described above, with the structure in which storage water is allowed to flow out from the opening 24 of the untreated-water outflow unit 17 toward the filtering surface of the filter 21 in the water exchange operation, cleaning of the filter 21 can be performed in parallel with the exchange of water in the housing 13 from untreated water to storage water. Furthermore, storage water can be allowed to flow in the housing 13 without connecting a new pipe to the housing 13.

The storage water is water having less favorable survival conditions for microbes than seawater. The storage water is preferably water having a salinity of less than 2%, and more preferably water having a salinity of 0% to 0.05%. The storage water preferably contains hypochlorous acid in order to further prevent microbes in the housing 13 from proliferating.

Furthermore, the temperature of the storage water is preferably a temperature different from an assumed temperature of seawater, specifically, the temperature being a temperature of 40°C to 90°C so that the environment in the housing 13 is made to be closer to an environment in which microbes living in seawater are unlikely to proliferate.

For example, after a predetermined time elapses from the start of the water exchange operation, the control unit 15 closes all the valves 131, 132, 133, and 134 and drives the motor 14 for 1 to 10 hours. Consequently, the inside of the housing 13 is stirred by the storage water.

This operation performed by the water treatment device 101, that is, the operation of performing stirring in the housing 13 in a state where the housing 13 is filled with storage water is hereinafter referred to as "stirring operation".

### (Details of control by control unit)

The higher the rotational speed of the motor 14, the larger the area of the filtering surface of the filter 21 that comes in contact with untreated water per unit time, and thus it is expected that the amount of untreated water that can be filtered per unit time increases. However, with an increase in the rotational speed, a region with which the untreated water or storage water does not sufficiently come in contact is generated in the filter 21, and the filter 21 may not be sufficiently cleaned. Therefore, it is desirable to appropriately set the rotational speed of the motor 14.

The water treatment device 101 does not necessarily need to include the motor 14. However, considering the relationship between the speed of the filtration and the effect of cleaning the filter 21 as described above, preferably, the water treatment device 101 1 includes the motor 14, and the rotational speed of the motor 14 is controllable.

The control unit 15 of the water treatment device 101 according to an embodiment of the present invention can set the rotational speed of the motor 14 to different values in the filtration operation, the cleaning operation, the water exchange operation, and the stirring operation.

For example, in the filtration operation, the control unit 15 controls the rotational speed of the motor 14 so as to become 50 rpm. In the cleaning operation and the water exchange operation, the control unit 15 controls the rotational speed of the motor 14 so as to become 25 to 35 rpm. Furthermore, in the stirring operation, the control unit 15 controls the rotational speed of the motor 14 so as to become 22 to 50 rpm.

Accordingly, in each of the filtration operation, the cleaning operation, the water exchange operation, and the stirring operation, the rotational speed of the motor 14 can be appropriately set.

### [Flow of operations]

Next, the flow of operations of the water treatment device 101 according to an embodiment of the present invention will be described.

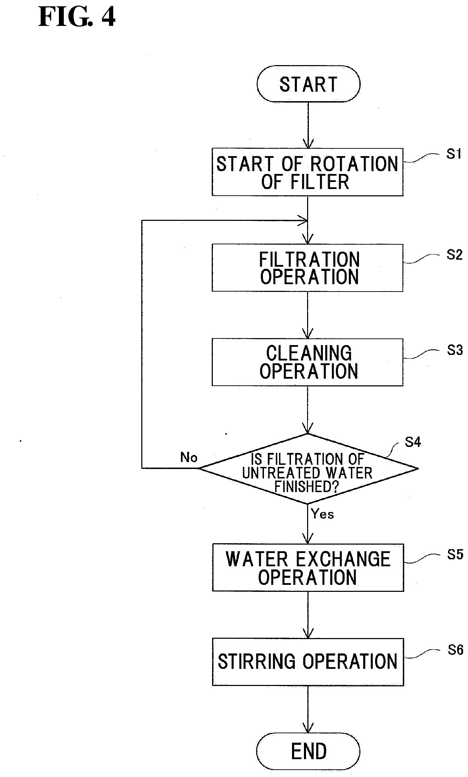

Figure 4 is a flowchart illustrating the flow of operations of a water treatment device according to the first embodiment of the present invention.

The control unit 15 in the water treatment device 101 includes a computer. An arithmetic processing unit such as a CPU in the computer reads out, from a memory (not illustrated), programs including a part of or all of each step of the flowchart described below and executes the programs. Such programs of the device can be installed from the outside. Such programs of the device are each circulated in the form of being stored in a recording medium.

Referring to Fig. 4, the water treatment device 101 alternately repeats the filtration operation and the cleaning operation until the time when filtration of untreated water is finished, and performs the water exchange operation and the stirring operation upon finishing the filtration of untreated water.

Specifically, first, the control unit 15 in the water treatment device 101 drives the motor 14, and the filter 21 thereby starts rotation (step S1). Subsequently, the water treatment device 101 performs, for example, the filtration operation for 10 hours (step S2). Subsequently, the water treatment device 101 switches to the cleaning operation and performs the cleaning operation for 1 hour (step S3).

Next, the control unit 15 determines whether or not filtration of untreated water, that is, storage of filtered water in the filtered-water tank 106 is finished (Step S4) by determining, for example, whether or not the total time of the filtration operation is equal to or more than a predetermined time. When the control unit 15 determines that storage of filtered water is not finished ("No" in step S4), the control unit 15 controls the opening and closing of the valves 131, 132, 133, and 134, the driving of the motor 14, and the driving of the pump 103 so as to stitch to the filtration operation again, and the filtration operation is performed again for 10 hours.

In contrast, when the control unit 15 determines that storage of filtered water is finished ("Yes" in step S4), the control unit 15 controls, for example, the opening and closing of the valves 131, 132, 133, and 134 so that the water exchange operation starts (step S5). Subsequently, for example, when a predetermined time elapses from the start of the water exchange operation, the control unit 15 controls, for example, the opening and closing of the valves 131, 132, 133, and 134 so that the stirring operation is performed for a predetermined time (step S6).

The water treatment device 101 performs the water exchange operation at least after the filtration operation. Thus, the water treatment device 101 may operate in a procedure different from the procedure illustrated in Fig. 4. In Fig. 4, a description has been made of a procedure of the operations of the water treatment device 101 when ballast water is carried in a ship. Similarly, when ballast water is discharged from a ship, the water treatment device 101 can perform the filtration operation, the cleaning operation, the water exchange operation, and the stirring operation.

### (Modification 1)

The control unit 15 may be configured to sense a differential pressure ΔP between a pressure of the outside of the filter 21 and a pressure of the inside of the filter 21 instead of checking the time during which the filtration operation is performed and the time during which the cleaning operation is performed. In such a case, when, for example, microbes adhere to the filter 21 and clogging of the filter 21 occurs, permeation of untreated water from the outside to the inside of the filter 21 is not performed smoothly. Consequently, the differential pressure ΔP between the pressure of the outside of the filter 21 and the pressure of the inside of the filter 21 gradually increases.

Therefore, the control unit 15 may be configured to, for example, switch from the filtration operation to the cleaning operation when the differential pressure ΔP becomes a predetermined value or more, and to switch from the cleaning operation to the filtration operation when the differential pressure ΔP becomes less than the predetermined value.

The control unit 15 may be configured to, for example, switch from the cleaning operation to the water exchange operation when the control unit 15 senses the differential pressure ΔP to be less than a predetermined value and thereby determines that cleaning of the filter 21 is finished, and confirms that the amount of water in the filtered-water tank 106 reaches a predetermined value.

Furthermore, the control unit 15 may be configured to, for example, sense the salinity of water in the housing 13 at predetermined time intervals in the water exchange operation and to switch from the water exchange operation to the stirring operation when the sensed salinity becomes less than 2%.

### (Modification 2)

The control unit 15 may be configured to, for example, sense the turbidity of filtered water flowing through the filtered-water flow path 18 and the discharge flow path 19. The control unit 15 may be configured to switch from the filtration operation to the cleaning operation when the turbidity of the filtered water flowing through the filtered-water flow path 18 becomes a predetermined value or more, and to switch from the cleaning operation to the filtration operation when the turbidity of the untreated water flowing through the discharge flow path 19 becomes less than the predetermined value.

The control unit 15 may be configured to, for example, switch from the cleaning operation to the water exchange operation when the control unit 15 senses the turbidity of untreated water flowing through the discharge flow path 19 to be less than a predetermined value and thereby determines that cleaning of the filter 21 is finished, and confirms that the amount of water in the filtered-water tank 106 reaches a predetermined value.

### (Modification 3)

The structure of switching from the filtration operation or the cleaning operation to the water exchange operation is not limited to a structure in which the switching is automatically performed by the control unit 15. Alternatively, the switching may be performed by the operation of an operator. Specifically, regardless of the total time of the filtration operation, the differential pressure ΔP between a pressure of the outside of the filter 21 and a pressure of the inside of the filter 21, or the like, for example when an operator confirms that the amount of water in the filtered-water tank 106 reaches a predetermined value, the operation may be switched from the filtration operation or the cleaning operation to the water exchange operation by operating, for example, opening and closing of the valves 131, 132, 133, and 134.

In the case where, for example, opening and closing of the valves 131, 132, 133, and 134 are performed in this manner by an operation by an operator, the pipe 125, the valves 131, 132, 133, and 134, and the storage water tank 107 correspond to the water-exchanging part for replacing the untreated water in the water treatment device 101 by storage water.

During the period in which filtration of untreated water is not performed, a filtering device is often allowed to be in a state where the untreated water is stored in a housing of the filtering device with the consideration that, for example, substances adhering to a filter are unlikely to separate due to drying in the housing, and it is necessary to perform an operation for removing air in the device the next time filtration is performed. However, when seawater, which is untreated water, is stored in the filtering device, microbes such as plankton contained in the seawater adhere to the filter, and microbes that are not completely separated from the filter during cleaning of the filter proliferate. Accordingly, even if cleaning of the filter is performed, clogging of the filter may occur again.

In view of this, a water treatment method according to the first embodiment of the present invention is a water treatment method used in the water treatment device 101 that includes the filter 21 for filtering untreated water and the housing 13 that houses the filter 21, the method including a step of putting untreated water into the housing 13 to obtain filtered water that has permeated through the filter 21, and a step of replacing the untreated water in the housing 13 by storage water. The storage water is water having less favorable survival conditions for microbes than the untreated water.

According to this method, proliferation of microbes in the housing 13 can be suppressed during the time in which filtration of untreated water is not performed, and the occurrence of clogging of the filter 21 can be suppressed.

The water treatment method according to the first embodiment of the present invention further includes a step of performing a cleaning operation of the filter 21, the cleaning operation including, after the filtered water is obtained, allowing the untreated water to flow out toward the filter 21 while rotating the filter 21. In the step of replacing the untreated water by storage water, the untreated water is replaced by the storage water after the cleaning operation is performed.

In this manner, the untreated water is replaced by the storage water in a state in which the filter 21 is cleaned to separate microbes adhering to the filter 21 from the filter 21. Accordingly, the probability that microbes in the housing 13 come in contact with the storage water is increased, and proliferation of microbes can be further prevented. In addition, the whole filter 21 can be cleaned with high efficiency by rotating the filter 21.

In the water treatment method according to the first embodiment of the present invention, in the step of performing a cleaning operation, the cleaning operation is performed in a state in which a flow path for obtaining the filtered water is closed.

In the cleaning operation, since the flow path for obtaining filtered water is closed, the filtered water accumulates inside the filter 21 without being introduced into the flow path, and the inside of the filter 21 is filled with the filtered water. When untreated water is further allowed to flow out toward a filtering surface, the possibility that, after the untreated water comes in contact with the filtering surface, the untreated water may flow to the outside of the filter 21 without permeating through the filter 21 increases. As a result, it is possible to prevent, for example, microbes, which may cause clogging of the filter 21, from adhering to the filter 21.

Since the inside of the filter 21 is filled with the filtered water, for example, microbes that have already adhered become easily separated from the filter 21. That is, a higher cleaning effect to the filter 21 can be obtained. By replacing the untreated water by storage water after this highly effective cleaning operation, the probability that microbes adhering to the filter 21 come in contact with the storage water can be further increased.

The water treatment method according to the first embodiment of the present invention further includes, a step of, after the untreated water is replaced by the storage water, rotating the filter 21 in a state in which the storage water is contained in the housing 13.

By stirring the inside of the housing 13 containing the storage water, the probability that microbes in the housing 13 come in contact with the storage water is further increased to further prevent microbes in the housing 13 from proliferating.

In the water treatment method according to the first embodiment of the present invention, the storage water is water having a salinity of less than 2%.

By replacing water in the housing 13 by the storage water having a salinity of less than 2%, the environment in the housing 13 can be made to an environment in which microbes living in seawater are unlikely to proliferate.

Next, other embodiments of the present invention will be described with reference to the drawings. In the drawings, the same portions or the corresponding portions are assigned the same reference numerals, and a description thereof is not repeated.

### (Second embodiment)

In the water treatment system 201 according to the first embodiment, in the water exchange operation, the storage water stored in the storage water tank 107 flows into the housing 13 through the pipe 125, the valve 133, the untreated-water flow path 16, and the untreated-water outflow unit 17. On the other hand, in a water treatment system 201 according to a second embodiment of the present invention, storage water stored in a storage water tank 107 flows into a housing 13 without passing through an untreated-water flow path 16 and an untreated-water outflow unit 17.

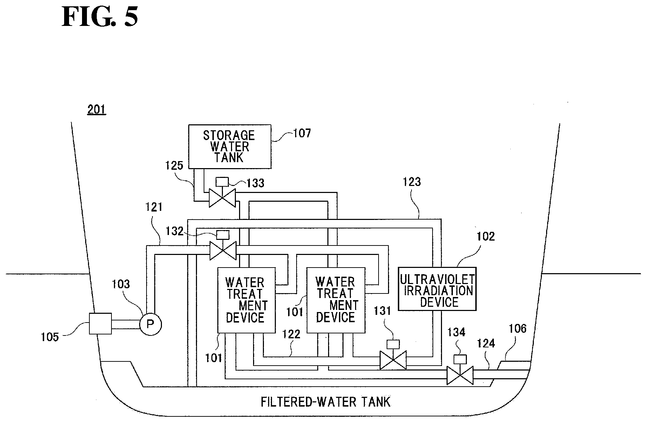

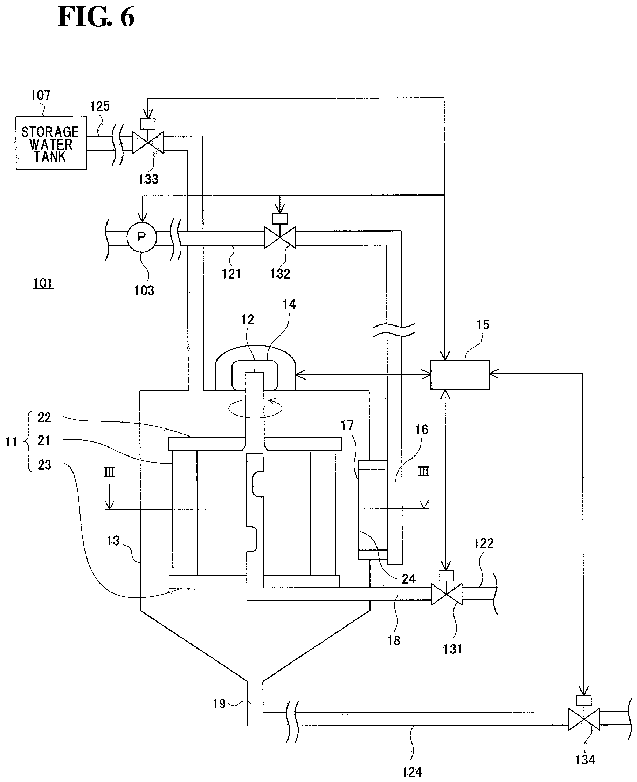

Figure 5 is a view illustrating the structure of the water treatment system 201 including water treatment devices according to the second embodiment of the present invention. Figure 6 is a vertical sectional view illustrating the structure of a water treatment device according to the second embodiment of the present invention.

Referring to Figs. 5 and 6, the water treatment system 201 according to the second embodiment of the present invention includes water treatment devices 101, an ultraviolet irradiation device 102, a pump 103, valves 131, 132, 133, and 134, a seawater intake 105, a filtered-water tank 106, a storage water tank 107, and pipes 121, 122, 123, 124, and 125, as in the water treatment system 201 according to the first embodiment.

A point different from the first embodiment will be mainly described here. The pipe 125 is connected directly to the water treatment device 101 instead of being connected to the pipe 121.

With this structure, when the water exchange operation is performed, a control unit 15 opens the valves 133 and 134, closes the valves 131 and 132, and drives a motor 14. In this case, storage water stored in the storage water tank 107 is pushed out by a pump (not illustrated) and flows out from the pipe 125 into the housing 13 directly.

Other structures and operations are the same as those of the water treatment system 201 according to the first embodiment of the present invention, and thus a detailed description is not repeated here.

### (Third embodiment)

In the water treatment systems 201 according to the first embodiment and the second embodiment, in the water exchange operation, storage water stored in the storage water tank 107 flows into the housing 13.
On the other hand, in a water treatment systems 201 according to a third embodiment of the present invention, in the water exchange operation, filtered water stored in a filtered-water tank 106 flows out as storage water into a housing 13.

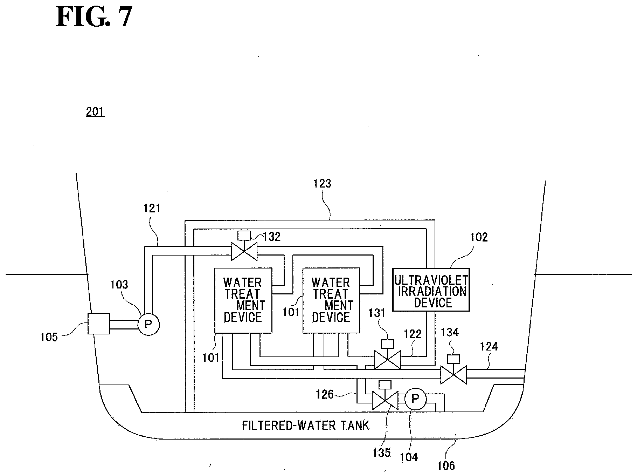

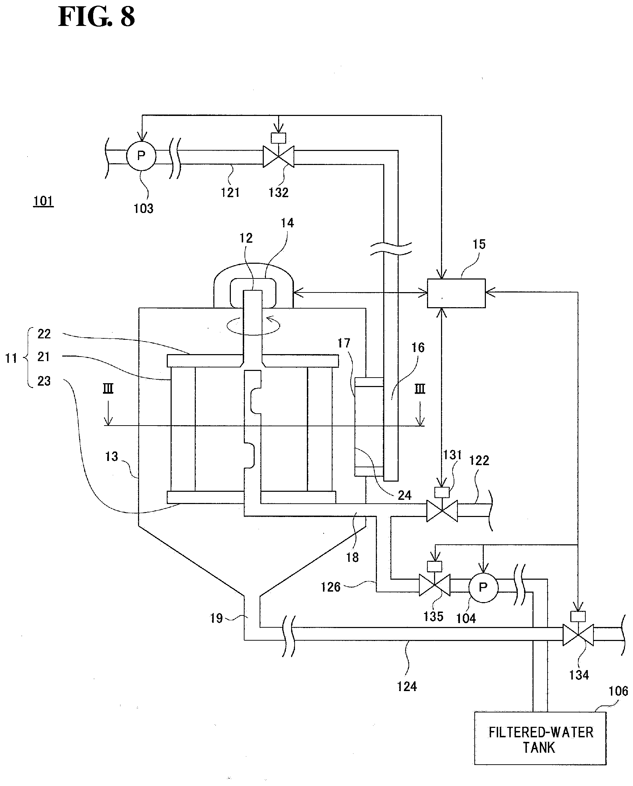

Figure 7 is a view illustrating the structure of the water treatment system 201 including water treatment devices according to the third embodiment of the present invention. Figure 8 is a vertical sectional view illustrating the structure of a water treatment device according to the third embodiment of the present invention.

Referring to Figs. 7 and 8, compared with the water treatment system 201 according to the first embodiment, the water treatment system 201 according to the third embodiment of the present invention includes a water-exchanging part for replacing untreated water in water treatment devices 101 by filtered water, the water-exchanging part including a pump 104, a valve 135, and a pipe 126, instead of the valve 133, the storage water tank 107, and the pipe 125.

A point different from the first embodiment will be mainly described here. A filtered-water flow path 18 of each of the water treatment devices 101 is connected to both a pipe 122 and the pipe 126. A valve 131 is provided in the pipe 122, and the pipe 122 connects the filtered-water flow path 18 to an ultraviolet irradiation device 102. The valve 135 and the pump 104 are provided in the pipe 126, and the pipe 126 connects the filtered-water flow path 18 to a filtered-water tank 106.

With this structure, a control unit 15 opens the valves 131, 132, and 134, closes the valve 135, and drives a motor 14 and a pump 103 to thereby perform a filtration operation. The control unit 15 further closes the valve 131 to thereby perform a cleaning operation.

When the control unit 15 opens the valves 134 and 135, closes the valves 131 and 132, and drives the motor 14 and the pump 104, filtered water stored in the filtered-water tank 106 is pushed out by the pump 104 and flows out as storage water in the housing 13 through the pipe 126 and the filtered-water flow path 18. Furthermore, the control unit 15 closes all the valves 131, 132, 134, and 135 and drives the motor 14 to thereby perform a stirring operation.

Other structures and operations are the same as those of the water treatment system 201 according to the first embodiment of the present invention, and thus a detailed description is not repeated here.

As described above, in the water treatment method according to the third embodiment of the present invention, the storage water is the filtered water that has permeated through the filter 21.

Since the filtered water that has permeated through the filter 21 is used as storage water, the storage water need not be prepared in advance. Furthermore, a tank or the like for storing the storage water need not be provided.

It is to be understood that the embodiments described above are only illustrative and are not restrictive in all respects. The scope of the present invention is defined not by the above description but by the claims described below. It is intended that the scope of the present invention includes the meaning of equivalents of the claims and all modifications within the scope of the claims.

The above description encompasses features described as Appendixes below.

### [Appendix 1]

A water treatment method for replacing untreated water in a water treatment device by storage water, the water treatment device including
a filter for filtering the untreated water, and
a housing that houses the filter,
the storage water being water at a temperature of 40°C to 90°C, the water having less favorable survival conditions for microbes than the untreated water and having a salinity of 0% to 0.05%,
the water treatment method including:
a step of putting the untreated water into the housing to obtain filtered water that has permeated through the filter; and
a step of replacing the untreated water in the housing by storage water.

### [Appendix 2]

A water treatment device including a filter for filtering untreated water; a housing that houses the filter; and a water-exchanging part for replacing the untreated water in the housing by storage water at a temperature of 40°C to 90°C, the storage water having less favorable survival conditions for microbes than the untreated water and having a salinity of 0% to 0.05%.

## Claims

1. A water treatment method for replacing untreated water in a water treatment device by storage water, the water treatment device including
a filter for filtering the untreated water, and
a housing that houses the filter,
the storage water being water having less favorable survival conditions for microbes than the untreated water,
the water treatment method comprising:
a step of putting the untreated water into the housing to obtain filtered water that has permeated through the filter; and
a step of replacing the untreated water in the housing by storage water.

2. The water treatment method according to Claim 1, further comprising:
a step of performing a cleaning operation of the filter, the cleaning operation including, after the filtered water is obtained, allowing the untreated water to flow out toward the filter while rotating the filter,
wherein, in the step of replacing the untreated water by storage water, the untreated water is replaced by the storage water after the cleaning operation is performed.

3. The water treatment method according to Claim 2, wherein, in the step of performing a cleaning operation, the cleaning operation is performed in a state in which a flow path for obtaining the filtered water is closed.

4. The water treatment method according to any one of Claims 1 to 3, further comprising:
a step of, after the untreated water is replaced by the storage water, rotating the filter in a state in which the storage water is contained in the housing.

5. The water treatment method according to any one of Claims 1 to 4, wherein the storage water is water having a salinity of less than 2%.

6. The water treatment method according to any one of Claims 1 to 4, wherein the storage water is the filtered water that has permeated through the filter.

7. A water treatment device comprising:
a filter for filtering untreated water;
a housing that houses the filter; and
a water-exchanging part for replacing the untreated water in the housing by storage water having less favorable survival conditions for microbes than the untreated water.

8. A water treatment device comprising:
a filter for filtering untreated water;
a housing that houses the filter; and
a water-exchanging part for replacing the untreated water in the housing by filtered water.

9. The water treatment method according to any one of Claims 1 to 6, wherein the untreated water is seawater.

10. The water treatment device according to Claim 7 or 8, wherein the untreated water is seawater.
